(19) **Europäisches Patentamt**
**European Patent Office**
**Office européen des brevets**

(11) **EP 2 519 895 B1**

(12) **EUROPEAN PATENT SPECIFICATION**

(45) Date of publication and mention
of the grant of the patent:
**23.01.2019 Bulletin 2019/04**

(21) Application number: **10841338.6**

(22) Date of filing: **29.12.2010**

(51) Int Cl.:
***G05B 23/02*** *(2006.01)* ***G01D 3/08*** *(2006.01)*

(86) International application number:
**PCT/MY2010/000331**

(87) International publication number:
**WO 2011/081514 (07.07.2011 Gazette 2011/27)**

(54) **METHOD AND APPARATUS FOR MONITORING PERFORMANCE AND ANTICIPATE FAILURES OF PLANT INSTRUMENTATION**

VERFAHREN UND VORRICHTUNG ZUR ÜBERWACHUNG DER LEISTUNG UND ZUR ANTIZIPATION VON FEHLERN EINER ANLAGENINSTRUMENTIERUNG

PROCÉDÉ ET APPAREIL POUR SURVEILLER LES PERFORMANCES ET ANTICIPER LES PANNES DES INSTRUMENTS D'UNE USINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2009 MY PI20095691**

(43) Date of publication of application:
**07.11.2012 Bulletin 2012/45**

(73) Proprietor: **Petroliam Nasional Berhad (Petronas) Kuala Lumpur City Centre, 50088 Kuala Lumpur (MY)**

(72) Inventor: **MD SANI, Mohad Azrin Bin Terengganu (MY)**

(74) Representative: **Potter Clarkson**
**The Belgrave Centre**
**Talbot Street**
**Nottingham NG1 5GG (GB)**

(56) References cited:
**EP-A1- 1 393 136** **WO-A1-02/088850**
**WO-A1-2009/016020** **US-A1- 2005 182 581**
**US-A1- 2008 086 283** **US-A1- 2009 055 070**

**Description**

This invention relates to a method for anticipating and/or detecting the failure of instruments.

Measuring-instruments such as analyzers and sensors, along with control valves and other field instruments, can fail over time. Typically maintenance of failed sensors only occurs a significant time after failure. The instruments will often have failed some time before their failure is noticed and consequently the data from them for an unknown length of time preceding the identification of the failure will be unreliable. In some cases the operation of the instrument is critical and any length of time in which it is unknowingly faulty can cause create problems in, for example, the running of an industrial plant.

Hi-tech analyzers, for example those that measure Oxygen, pH, purity, purity, moisture etc, can be very powerful tools in allowing the running of an industrial plant to be optimized. However, at present their lack of reliability and likelihood of failure means that their operators lose confidence in the data they provide. Consequently a significant percentage of analyzers are not utilized, and many more are only used for monitoring processes and not deemed reliable enough for optimizing those processes. At present in order to improve the situation the main option available is to increase maintenance of the analyzers. However maintenance is labor intensive and still may not always fix failing analyzers because it is not apparent the manner in which they are failing.

There are some known mathematical routines for detecting failed sensors for measuring process parameters such as those described in US 5680409 and its introduction. However, these rely on providing sensor estimate signals which are often inaccurate, and only detect sensors once they deviate strongly from these estimates. Additionally such systems often wrongly identify sensors as failed when they are simply providing a routine error in measurement.

US Patent application no. US 2005/182581 discloses a method of detecting an unhealthy/potentially/ failing instrument which is carried out by measuring a characteristic of the output of an instrument. The measurement of the characteristic is compared to an expected distribution of the instrument when healthy. The probability of the instrument producing such a characteristic measurement, or a value further from the mean of the expected distribution, if it was healthy is calculated. The measured characteristic to an expected distribution of the instrument when unhealthy is compared, and the probability of the instrument producing such a characteristic measurement, or a value further from the mean of the expected distribution, if it was unhealthy is calculated. The probability of the measured characteristic being produced by the instrument when healthy and when unhealthy is compared. A confidence value indicative of the likelihood of the instrument being unhealthy is then produced.

The situation can be improved if failure of sensors can be quickly detected or predicted before they occur.

It is an object of the present invention to mitigate at least some of the above mentioned problems.

According to the first aspect of the present invention there is provided a method of measuring a characteristic of the output of an instrument by using one or more test algorithms to produce a confidence health index for the instrument according to claim 1.

Further aspects and aims of the invention will become apparent from the appended claim set.

Embodiments of the invention will now be described, by way of example only, and with reference to following drawings in which:

Figure 1 is an illustration of an example of a measuring instrument and associated input device;

Figure 2 is an illustration of analyzing apparatus 10 in accordance with invention;

Figure 3 is a flow process of providing a confidence health index in accordance with invention;

Figure 4 is n illustration of fluctuating data from an analyzer;

Figure 5 is an illustration of past fluctuating data from a failed analyzer;

Figure 6 is an illustration of data containing a spike;

Figure 7 is an illustration of probability distributions; and

Figure 8 is a Venn diagram of probabilities.

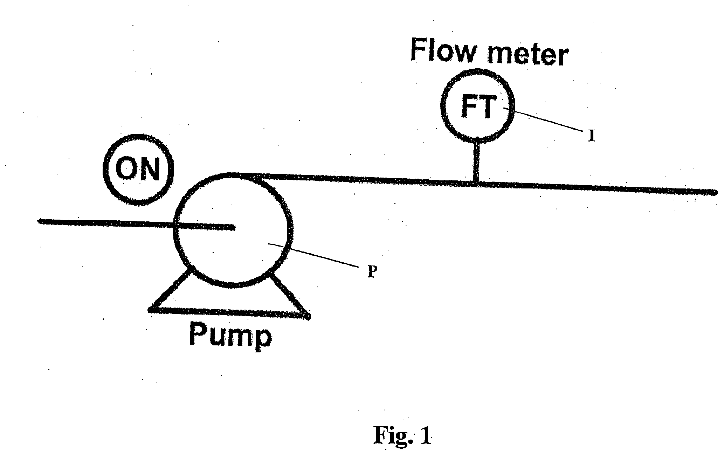

Referring to Figure 1 there is shown an example of a measuring instrument I, which in this case is a flow meter. The measuring instrument I detects an output dependent on an input device P, which in this case is a pump. The flow meter, instrument I, is measuring the rate of flow of fluid generated by the pump P.

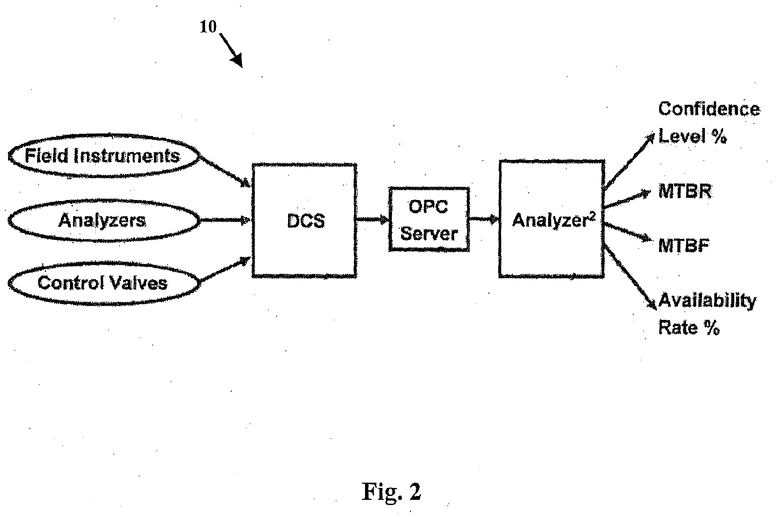

In Figure 2 is shown analyzing apparatus 10 in accordance with invention.

Analyzing apparatus comprises a Distributed Control System (DCS) 12, an OPC server 14 and an analyzing module 16.

The DCS 12 may be conventional. It takes its data from instruments I including field instruments, analyzers and control valves.

The DCS 12 sends its output data to the OPC server 14, which server may work in a conventional manner.

The server 14 outputs data in OPC format to the analyzing module 16. The analyzing module may comprise a computer with processor and memory (memory being used to mean both RAM and data storage such as a hard drive), programmed to perform the processes and algorithms that will be described below.

Using these processes and algorithms, analyzing module 16 then provides outputs such as confidence level indicator that will be described below, along with the mean time between failure of a particular instrument (MTBF), the mean time between repair of a particular instrument (MTBR), and availability rate (the percentage of time a given instrument is always available). The confidence level indicator describes how confident the apparatus 10 is that a given instrument I is healthy. It is a simple value between 0 and 100% or as a decimal between 0 and 1. If the indicator reads 80% (or 0.8), it means that it is 80% confident that the instrument is healthy. In a predictive maintenance program, the confidence level indicator should prompt maintenance personnel to check the instrument if the indicator drops below a predetermined value such as 95%. The MTBF can then either classify a failure as an instance when the instrument fell below this value or when it is confirmed as failed/failing by maintenance personnel.

These outputs may be output to a display screen and/or or sent to other computers, or computer programs for further analysis and actions.

As an alternative the analyzing module 16 may be implemented solely in hardware such as in silicon circuits.

Before a measuring instrument I fails, it will exhibit some distinct behavior. These behaviors may include a sudden increase in reading fluctuations, spikes in reading, or slow response to plant processes.

The analyzing module 16 runs algorithms which use the data from the OCS server 14 (originating from the instruments I) and is able to predict the state of an instrument by analyzing its trend behavior. By detecting pre-failure behavior of instruments, it is possible to anticipate a failure before it actually happens.

In use the analyzing module 16 takes data from an instrument I (via DCS 12 and server 14) over a predetermined length of time to act as a sample to be analyzed. This sample size/length can be varied but too small a sample can increase the chance of the apparatus 10 not observing any pattern and taking too large a sample will have an averaging effect on the analysis which can reduce or cancel out a discrete pattern. Three hours has been found to be a suitable length of time for many instruments I.

The frequency of the sampling is also predetermined but can be varied. Preferably the sampling frequency follows Nyquists sampling theorem such that the sampling frequency is at least twice the observable pattern frequency. A high sampling frequency will generally improve analysis but too high a frequency can run into bandwidth issues on a computer network and therefore the upper limit is dependent on the physical hardware used as part of analyzing apparatus 10. For slow moving instruments such as process analyzers, it is efficient to use a low sampling frequency. For most instruments a 5 seconds interval is found to be suitable but for slow moving instruments, a one minute interval or data is adequate and with consequent benefits in reducing bandwidth and computer processing.

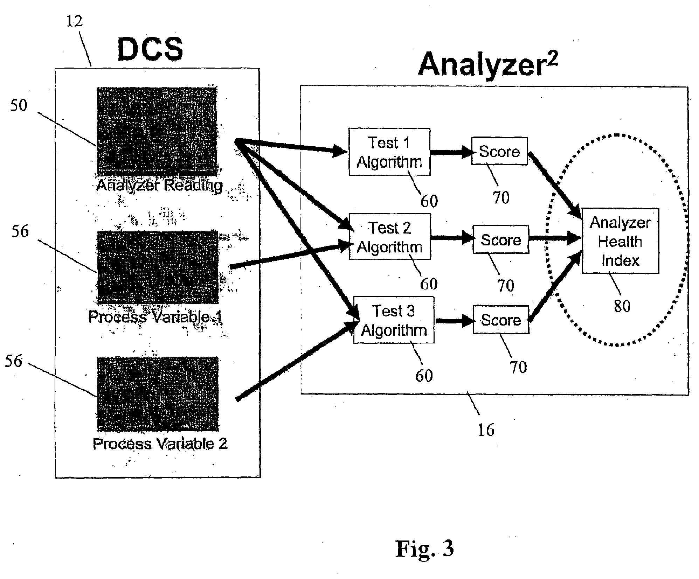

Referring to Figure 3 there is shown a process of providing a confidence health index. For each instrument (in this instance analyzers) a series of readings 50 and process variables 56 are taken at the DCS 12 and one or more test algorithms 60 are applied to them by the analyzing module 16. Each of the algorithms 60 produce a different score 70 for each instrument/analyzer I which are combined to provide a single confidence health index 80 for each instrument I.

In the illustrated example an analyzer reading 50 is provided to three different algorithms 60. One of these algorithms 60 uses this reading 50 in isolation and the other two use it in conjunction with the measurements of a process variables 56 that are believed to be associated with the instrument I in some way.

The test algorithms 60 can include six different algorithms a/Fluctuation level, b/Fluctuation period, c/Number of Spikes d/Value e/ Deviation and f/Moment Correlation, which will not all be appropriate for every instrument.

The scores 70 each comprise a pattern strength indicator and an algorithm confidence level. The pattern strength indicator is produced by test algorithm 60, the format of which may vary between algorithms 60. The algorithm confidence level is an indicator of the probability of the instrument I being healthy (or unhealthy/failing or failed) which can be expressed in a variety of ways such as a percentage or a decimal ranging from 0 to 1.

The health index 80 represents the percentage chance that the instrument I is healthy based on all of the test algorithms 60 and can be expressed in a similar format to the algorithm confidence levels.

Taking each of the six pattern recognition test algorithms 70 in turn:

**a/Fluctuation**

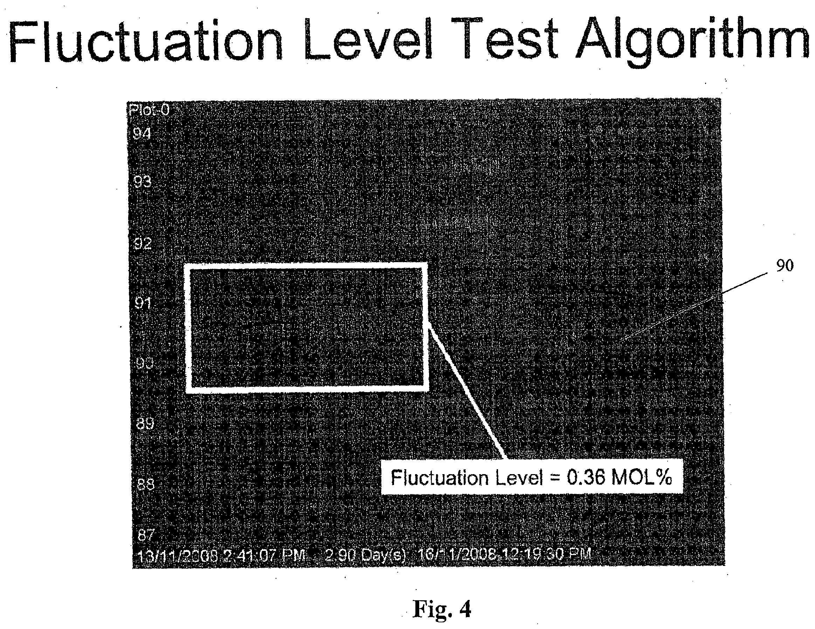

Referring to Figure 4 it can be seen that there are fluctuations in the data 90 from an instrument I and therefore a level of fluctuation.

It has been found that patterns in the level of fluctuation can be used to anticipate instrument failure in many instances. Healthy instruments can be expected to fluctuate between certain levels. Too large or too small fluctuations may indicate unhealthy instruments

The analyzing apparatus 10 calculates fluctuation level by averaging the peak to peak fluctuation of a trend in the sample. The output pattern strength indicator as part of score 70 is the magnitude of this average peak to peak fluctuation. An example of this algorithm 60 is shown as follows:-

```
Up Peak counted = False
Down Peak Counted = False
Go through each data in sample,
        If current data > last data, then
              Down peak counted = false
               Total Up Move = total up move + (current
                data - last data)
                If Up Peak Counted = False then
                      Total Peak = Total Peak + 1
                    Up Peak Counted = True
                End if
                     End If
        If current data < last data, then
                Up peak counted = false
                Total Down Move = total down move +
                 (current data - last data)
                 If Down Peak Counted = False then
                       Total Peak = Total Peak + 1
                Down Peak counted = True
                End if
                    End If
      Fluctuation Level = (Total Up Move + Total Down
     Move) / Total Peak
```

This is used to produce the output pattern strength indicator which in turn can be used to produce a confidence level as explained later.

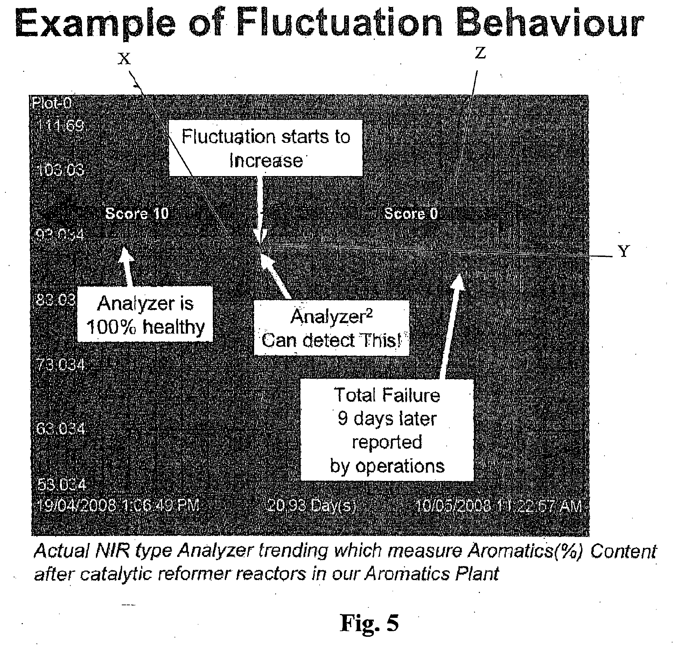

In Figure 5 can be seen a fluctuating trend of instrument data where the horizontal axis represents time. The analyzer in this case is an NIR analyzer which measures the percentage aromatics content after catalytic reformer reactions in an aromatics plant.

At point in time Z the analyzer I has been reported as completely failed by operational staff who have worked in a conventional manner. The data after point Z can be seen to be unusual in the extent of its fluctuation.

Up until point X the fluctuation level test algorithm produced a score close to 100% (or exactly 1.0 to the nearest two significant figures) so on the basis of these fluctuations levels the analyzer was working well. However after point Y the change in fluctuation levels has resulted in the score dropping to 0.0 (to 2 significant figures) indicating that a fault is very likely. Importantly point Y occurred nine whole days before point Z indicating that apparatus 10 can be very powerful at predicting failures in advance of their detection. In fact the score had been falling from 1 (or 100%) to 0 for the time between X and Y allowing even earlier detection.

b/ **Fluctuation Period Algorithm**

The fluctuation level algorithm, analyzes the fluctuation period of an instrument. Healthy instruments can be expected to fluctuate between certain periods. Too large or too small fluctuation periods may indicate unhealthy instruments. The analyzing module 16 calculates fluctuation period by averaging the upper peak to upper peak period of a trend. The output pattern strength indicator is the average fluctuation period. An example of the algorithm 60 is shown as follows:-

```
Up Peak Counted = False
Down Peak Counted = False
Go through each data in sample,
        If current data > last data, then
              Down peak counted = false
              Total Up Period = Total Up Period +
               (current data timestamp - last data
```

```
                               timestamp)
                  If Up Peak Counted = False then
                       Total Peak = Total Peak + 1
                      Up Peak Counted = True
                  End if
                          End If
          If current data < last data, then
                  Up peak counted = false
                  Total Down Period = Total Down Period +
                  (current data timestamp - last data
                  timestamp)
                  If Down Peak Counted = False then
                       Total Peak = Total Peak + 1
                     Down Peak Counted = True
                  End if
                          End If
      Fluctuation Period = 2 x (Total Up Period + Total
      Down Period) / Total Peak
```

Again the output pattern strength indicator is used to produce a confidence level.

**c/Spike**

A spike is a sudden increase (or decrease) in an instrument reading. It has been found that healthy instruments do not spike and that a spike is a good pre-indication that at instrument is going to fail.

In preferred embodiments the apparatus 10 identifies a spike if a data trend satisfies two conditions :-

1/ The instrument reading jumps higher than 2.5 times it's long term average fluctuation level. 2.5 times fluctuation level, is more or less similar to four times standard deviation. Four standard deviations will cover 99.994% of actual process values. The remaining 0.006% is the probability that a spike may be an actual process (i.e. not indicative of instrument failure). The long term average fluctuation is measured similarly to the fluctuations using the fluctuation level algorithm (a/ above) but is preferably taken from a long term sample described below.
Using a higher standard deviation coefficient will give an even more accurate spike but may run into possibility of reaching the instrument's maximum range. If the instruments reaches it's maximum range, the spike detection algorithm will not count anything higher than it.
2/ The jump takes place within half of a long fluctuation period.

Long fluctuation level/period is the fluctuation level/period calculated using the fluctuation level/period algorithm described above. The only difference is that instead of using the current sample, the longer time sample is used. It is reasonable to start at a default 15 day sample to obtain this long fluctuation level/period.

Conventionally, a spike is often described as a sudden increase which is immediately followed by a sharp decrease in a reading. However, the spike algorithms will generally define a spike only as the sudden increase/decrease part. If such increase is followed by a decrease, it will detect this as another spike. Hence giving two spikes in the reading.

The output pattern strength indicator is based on and is preferably equal to the Number of Spikes in the short sample. An example algorithm 60 is shown as follows

```
      SL = 4 x Long fluctuation level
                     'Spike Limit
      PL = 0.5 x Long fluctuation Period / Data Sampling Period 'Period
      Limit
      IF PL ≤ 1 then PL = 1
      Go through each data in sample,
            CD = Current Data
            Spike Detected = False
            Go through the next data in sample,
                  ND = Next Data
                  Spike = Spike + (CD - ND)
                  If (Absolute Value(Spike) > SL) then
                        Spike Detected = True
                        Number Spike = Number Spike + 1
```

```
                                End If
                     Data Counter = Data Counter + 1
                Repeat until (Data Counter ≥ PL) OR (spike
        Detected)
                          Data Counter = 0
                End Repeat
```

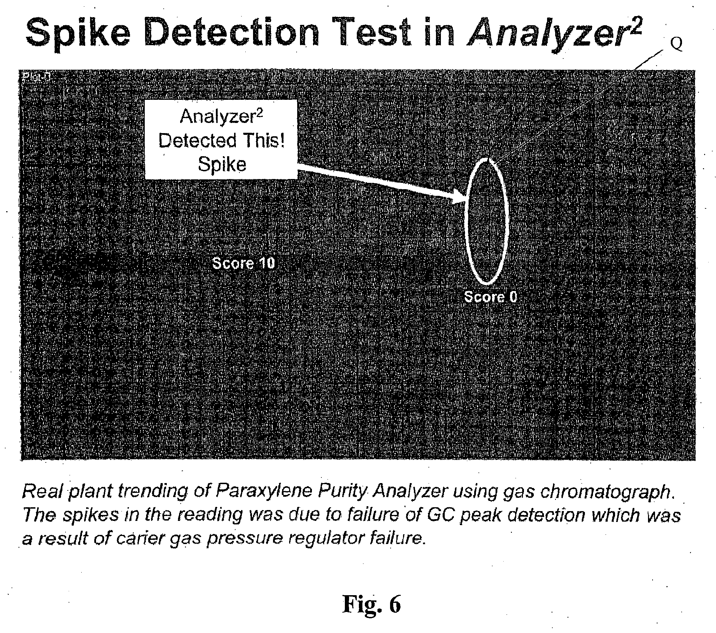

In Figure 6 is shown real plant trending of Paraxylene Purity Analyzer using a gas chromatograph.

Spikes such as the one at point Q were detected by apparatus 10 which were due to failure of GC peak detection which was in turn a result of carrier gas pressure regulator failure.

**d/Value**

With a stable plant process, a healthy instrument can be expected to read within certain values. For example, furnace excess Oxygen should typically be around 1 to 7%. The Value algorithm constantly monitors a moving average of the instrument reading. If the reading does not read within an expected range, the instrument may be considered faulty. The algorithm calculates the average. The output pattern strength indicator is the Average Value

```
        CD = Current Data
        Go through each data in sample,
              Total = Total + CD
                            Data Counter = Data Counter + 1
                Average Value = Total / Data Counter
```

e/ **Deviation**

The deviation algorithm takes readings form two similar instruments I and calculates the average deviation between the two instruments. Two similar instruments measuring the same point should have a standard allowable average deviation. The algorithm is demonstrated as follows. The output pattern strength indicator is the Average Deviation:

CD1 = Current Data 1
CD2 = Current Data 2
Go through each data in sample,

$$Total = Total + (CD2 - CD1)$$

$$Data\ Counter = Data\ Counter + 1$$

$$Average\ Value = Total\ /\ Data\ Counter$$

f/ **Moment Correlation Algorithm**

This has been found to be perhaps the most powerful algorithm 60 and is perhaps the most successful when used in isolation across a number of different instrument types.

The moment correlation algorithm measures the moment correlation between a particular instrument and other process variables. For example:

steam flow should correlate with the rate of change of temperature;
rate of level drop in a vessel should correlate with downstream flow rate.

This algorithm will require two sets of data one of which is typically instrument readings and one is typically a process variable.

Module 16 uses a variation of Pearson's product moment correlation coefficient formula. The output pattern strength indicator is the correlation coefficient, the formula being as follows:-

$$r = \frac{1}{n-1} \sum_{i=1}^{n} \left( \frac{X_i - \bar{X}}{s_X} \right) \left( \frac{Y_i - \bar{Y}}{s_Y} \right)$$ [Equation 1]

r is the Correlation Coefficient

s is long standard deviation. The standard deviation is not calculated from the sampled data on which the algorithms 60 are applied, but calculated from a longer time called the 'long sample data'. Again as a default value, a fifteen day sample would be good enough. The purpose of dividing with standard deviation is to have a 'zoom' effect or normalization on the data to the correlated. This is because the data's absolute values are different in measuring units or magnitudes. So, instead of looking at absolute values, it is more appropriate to look into it's relative to standard deviation,

X is a sample in the data set,

X with bar is the sample average and n is the sample size

The algorithm 60 can be based on the Equation 1 formula.

Equation 1 will produce a conventional correlation coefficient ranging from 0 (no correlation) to 1 (full correlation). Since a correlation is expected in a healthy instrument a coefficient that is decreasing may indicate a failing instrument. The coefficient or change in the coefficient is converted to a score between 0 and 10 to be compared to the other output values.

Equation 1 may not be suitable at all times for all instruments and processes. This is because if the process does not change, little change will be expected in the instrument data and the instrument's natural fluctuation frequency will be the dominate change. Since instrument's natural fluctuation frequency is independent of the process the result of equation 1 will be a near zero correlation coefficient even though the instrument I may be perfectly healthy.

For example flow meter I in Figure 1 may fluctuate between 2-4 $m^3$/hr when it's healthy. If the pump P stops pumping, the flow meter will no longer fluctuate. In this case, if the fluctuation algorithm is applied, it will not detect any fluctuation and hence give a low confidence level score on the flow meter's healthiness. This would be an inaccurate judgment on the flow meter.

To avoid this a trigger condition can be used. The trigger condition is to ensure that the algorithm does not execute if there is no movement change in the trend so the trigger condition identifies a movement in trend. In the example of figure 1 the condition will be set in a way so that if the pump is not pumping, the fluctuation level algorithm should not be executed. A suitable trigger condition is found to be when the difference between highest and lowest value in the sample is larger than twice it's "long" standard deviation s.

An example of a trigger condition algorithm is as follows:

A = highest value in data 1

B = lowest value in data 1

C = highest value in data 2

D = lowest value in data 2

s = long standard deviation

If [(A-B) > 2s] OR [(C-D) > 2s] then Calculate correlation coefficient of sample

The moment correlation test algorithm can also be adapted to be applied to situations where there are more than 2 data sets such as when two process variables are relevant.

Each set of data does not need to go through all pattern recognition algorithms. Some pattern recognition algorithms may not be applicable for that particular instrument. One example is the moment correlation and average deviation algorithm. These algorithms require two sets of data. Some instruments work independently. They have no correlation to any other instruments. It is therefore not sensible also to run the algorithm on that instrument.

Referring back to Figure 3 the first part of output scores 70, the pattern strength indicators, have been produced by the test algorithms 60.

The next stage is to use these values to determine a likelihood that the instrument is failing.

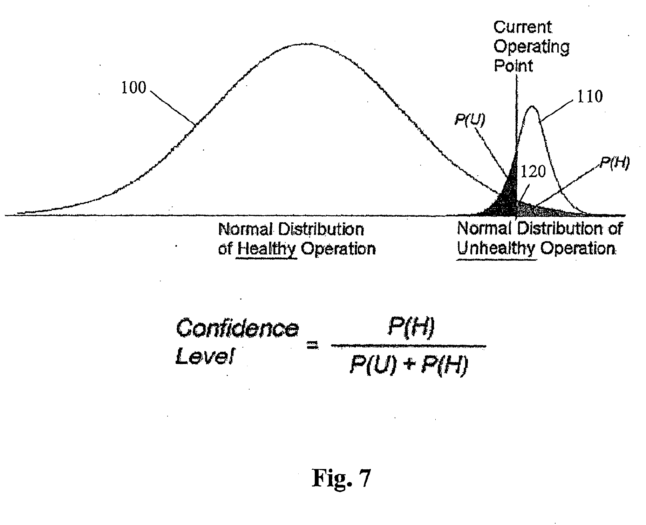

The horizontal axis in Figure 7 represent the reading on the particular instrument I or operating point. The vertical axis represents the probability of the reading/point occurring. In Figure 7 there is shown a healthy probability distribution function 100 for when the particular instrument I is healthy and the unhealthy probability distribution 110 for when it is not. As illustrated in Figure 7, these two functions 100 and 110 are each represented by bell curve/Gaussian produced by a normal distribution. In theory, the confidence level of healthiness is an approximation of an operation between these two probability distribution functions.

At any specific instrument reading or operating point, there is a probability that an instrument is healthy P(H) and a probability than an instrument is unhealthy P(U). The confidence level is the relative portion of P(H) against P(H) + P(U) i.e. can be represented by the equation

$$\text{Confidence Level} = P(H)/P(H) + P(U)$$

Once P(H) and P(U) have been obtained, it is therefore easy to calculate the confidence level. Since there will be several algorithm confidence levels from each different pattern recognition algorithms 60, in preferred embodiments these are integrated/combined as the confidence health index 80. Methods of doing so are explained below.

Sometimes there is more than one unhealthy probability distribution function for the same algorithm. One example is the fluctuation level. A particular instrument can be in an unhealthy state when it is fluctuating heavily and when failing slowly. In these case two confidence levels will be calculated which can also be combined/integrated as will be explained later on.

A theoretical normal distribution has endless limits. However, some pattern strength indicators are limited in values, so the normal distribution is truncated or stopped at these limits. Since the full area integration of a normal distribution (from-infinity to +infinity) must always be 1 (or 100%)the full area integration must still be 100% after the truncation.

| Pattern Recognition Algorithm | Probability Distribution Function |
|---|---|
| Moment Correlation | Normal Distribution truncated at +1 and -1 |
| Fluctuation Level | Normal Distribution Truncated at 0 |
| Fluctuation Period | Normal Distribution Truncated at 0 |
| Average Value | Normal Distribution Truncated at 0 if such value is impossible to be zero (e.g. length, Kelvin, flow rate and etc) |
| Average Deviation | Normal Distribution without truncation |
| Spike Detection | Binomial Distribution Truncated at 0 |

The spike detection algorithm produces a discrete pattern strength indicator (number of spikes) and therefore uses the discrete equivalent of normal distribution function which is the binomial distribution function.

A Binomial distribution is based on the number of successes in a series of independent observations. Each spike is considered a "success". The number of observations, n, will be the sample size divided by fluctuation level.

$$\Pr(K = k) = \binom{n}{k} p^k (1-p)^{n-k}$$

for $k = 0, 1, 2, \ldots, n$ and where

$$\binom{n}{k} = \frac{n!}{k!(n-k)!}$$

[Equation 2]

Where n is the sample size divided by fluctuation period, k is the number of spikes, Pr is the Probability of spike, P is the Probability of reading to go higher than four times standard deviation or 2.5 times fluctuation level (this value is 0.007% for the probability distribution function when healthy).

P should be equal to 0.006% because this is probability of an event happening that's higher than four times the standard deviation and this is how a "spike" has been defined i.e. it is the probability of a healthy instrument producing a spike.

As an example it may be found that an instrument reading spikes a single time. in the sample data. We first calculate P(H) using the formula above. Referring to Figure 7, a healthy operation, P(H) is the total area of the right hand side of the curve. The curve is crossed by the current operating point. In this case, the current operating point is '1 spike'. P(H) can thus be calculated by adding up all the values for P(2) up to P(n) or more simply it is just 1 - P(1)-P(0).

In order to calculate the P(H) and P(U) and therefore the confidence level, the shape of the healthy and unhealthy probability distributions 102 and 104 should be known. This is can be produced by modeling based on past behavior.

For a binomial distribution the two parameters needed are n and P. The size of the sample n is easily determined and in the case of the spikes P is also easily determined from the definition of a spike.

For normal distributions the "long" standard deviation and the mean are either known or estimated.

For the healthy distribution 102 the long sample can be taken starting from the analysis date and running a predetermined number of days.. For Example, to calculate the confidence level at 25/6/2008 6:32 am. The long sample should start at 25/6/2008 6:32 am and use data back on tome form this. If the long sample as 15 days, the sample size will therefore be from 15 to 25/6/2008.

For the unhealthy probability distribution function 110, this is preferably deduced from an analysis of a long sample when the instrument reading is known to be faulty. however, this is sometimes not practical since the instrument may not failed since installed. Even when historical data is present and the instrument is known to have failed, it may not be easy to identify the time when it failed suing conventional methods. Reference can be made to maintenance records but maintenance records are not always accurate.

Preferred embodiments use a default value system. It is possible to have standard default values for specific instrument applications. Example are:-a/Waste water treatment plant instruments, b/Reformer unit instruments, c/Boiler feed water instruments d/Furnace and boiler control instruments

Starting default value for each pattern recognition algorithm have been identified. This value can be used if little is known about how the specific instrument will behave when it's about to fail.

The table below lists down the source of the modeling parameters and it's starting default value:-

| Pattern Algorithm | Probability Distribution Function | Healthy Probability D Function Parameters | Unhealthy Probability Distribution Function<br><br>**Mean** | Unhealthy Probability Distribution Function<br><br>**Standard Deviation** |
| --- | --- | --- | --- | --- |
| Moment Correlation | Distribution truncated at +1 and -1 | Mean:<br><br>Long Sample Standard Deviation:Long Sample | Sample a time when the instrument is faulty<br><br>OR<br>Starting value = 0 | Sample a time when the instrument is faulty<br><br>OR<br>Starting value = Standard deviation when healthy |

(continued)

| Pattern Algorithm | Probability Distribution Function | Healthy Probability D Function Parameters | Unhealthy Probability Distribution Function<br><br>**Mean** | Unhealthy Probability Distribution Function<br>**Standard Deviation** |
|---|---|---|---|---|
| Fluctuation Level | Normal Distribution Truncated at 0 | <u>Mean</u> :<br><br>Long Sample <u>Standard Deviation</u> : Long Sample | Sample a time when the instrument is faulty<br><br>OR<br><br>Starting value = Mean + 4 standard deviations (for unhealthy heavy fluctuation),<br>OR<br>Starting value = Mean - 4 standard deviations (for unhealthy low fluctuation). Minimum value is 0. | Sample a time when the instrument is faulty<br>OR<br>Starting value = Standard deviation when instrument is healthy |
| Fluctuation Period | Normal Distribution Truncated at 0 | <u>Mean</u>:<br><br>Long Sample <u>Standard Deviation</u>: Long Sample | Sample a time when the instrument is faulty<br>OR<br>Starting value = Mean + 4 standard deviations (for unhealthy slow fluctuation), | Sample a time when the instrument is faulty |
|  |  |  | OR<br>Starting value = Mean-4 times standard deviations. Minimum value is 0. | OR<br>Starting value = Standard deviation when instrument is healthy |
| Average Value | Normal Distribution Truncated at 0 if such value is impossible to be below zero (e.g. length, Kelvin, etc) | <u>Mean</u> :<br><br>Long Sample <u>Standard Deviation</u>: Long Sample | Sample a time when the instrument is faulty<br>OR<br>Starting value = Mean + 4 standard deviations (for unhealthy higher value),<br>OR<br>Starting value = Mean - 4 standard deviations (for unhealthy lower value) | Sample a time when the instrument is faulty<br><br><br>OR<br>Starting value = Standard deviation when instrument is healthy |
| Average Deviation | Normal Distribution | <u>Mean</u> : Long Sample<br><br><u>Standard Deviation</u>: Long Sample | Sample a time when the instrument is faulty<br><br>OR<br><br>Starting value = Mean + 4 times standard deviation (for unhealthy higher value), | Sample a time when the instrument is faulty<br>OR<br><br>Starting value = Standard deviation when instrument is healthy |

(continued)

| Pattern Algorithm | Probability Distribution Function | Healthy Probability D Function Parameters | Unhealthy Probability Distribution Function _Mean_ | Unhealthy Probability Distribution Function _Standard Deviation_ |
|---|---|---|---|---|
| | | | OR Starting value = Mean - 4 times standard deviation (for unhealthy lower) | |
| Spike Detection | Binomial Distribution Truncated at 0 | <u>p:</u> 0.00007 <u>n:</u> Sample size divided by fluctuation period | <u>p:</u> Sample a time when the instrument is faulty | <u>n:</u> sample size divided by fluctuation period OR Value = 1/n from healthy sample |

It is possible that the instrument I is showing healthy behavior, but it's confirmed to be unhealthy, or is showing unhealthy behavior but it's confirmed healthy. Whether this is the case can not be calculated in advance and therefore it is worth knowing the probability that these issues will come.

Referring back to Figure 7 there can be seen an area of overlap between the healthy and unhealthy distribution 100 and 110 that is the area below curves delimited by both distribution 100 and 110. This area in fact represent the probability of showing unhealthy behavior but it's confirmed healthy. This value can be denoted as P(UB|H). The same areas is also the probability that it's showing a healthy behavior when it's confirmed unhealthy which can be denoted as P(HB|U). Since the total area of the bell curves is always equal to 1, P(UB|H) = P(HB|U).

This area 120 can be calculated by an algorithm performed by apparatus 10 as follows

```
x is the value at the intersection
 CDF(a,b,c) is the cumulative distribution function
with
        a = value at x-axis of normal distribution
        b = mean of normal distribution
        c = standard deviation of normal distribution
 m = mean of healthy behavior
 d = standard deviation of healthy behavior
 n = mean of unhealthy behavior
 e = standard deviation of unhealthy behavior
Y = A flag that indicates the mean of an unhealthy
 distribution is most likely to be higher than a
 healthy one.
a = d^2 - e^2
b = -2 x (n x d^2 - m x e^2)
c = n^2 x d^2 - m^2 x e^2 - 2 x d^2 x e^2 x ln(d/e)
If Y = True, x = (-b + root(b^2 - 4 x a x c))/ (2 x
a)
If Y = False, x = (-b - root(b^2 - 4 x a x c))/ (2 x
a)
If d = e, x = (m^2 - n^2)/(2*(m-n))
If Y = True, Area = CDF(m-abs(x-m),m,d) + CDF(x,n,e)
If Y = False, Area = CDF(n-abs(x-n),n,e) +
 CDF(x,m,d)
```

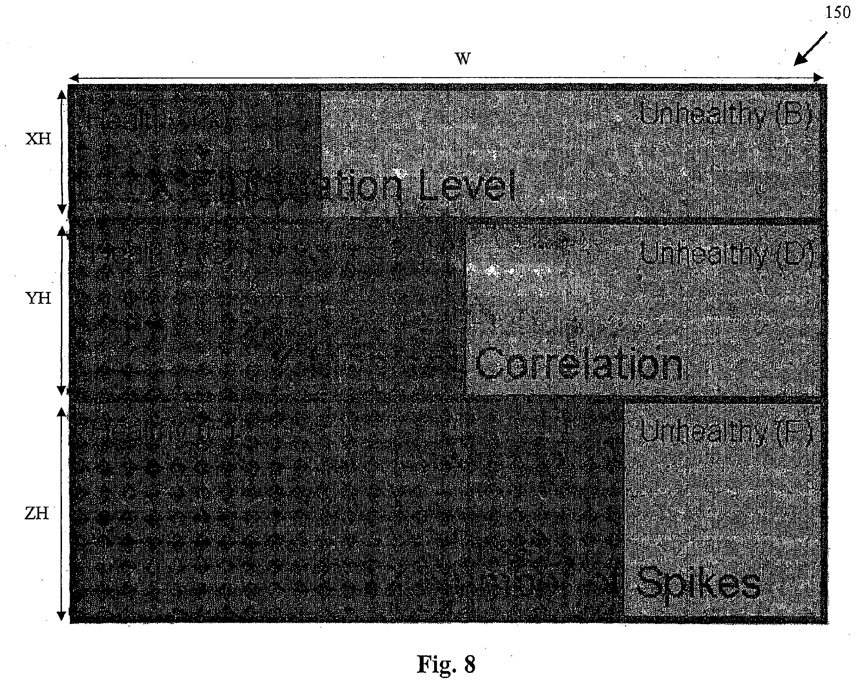

Referring to Figure 8 there is shown a Venn Diagram 150 of a particular instrument I's behavior. The Venn diagram 150 is a snapshot of a particular analysis time. The diagram includes three confidence levels which have been calculated from three different algorithms, these are fluctuation level X, Moment correlation Y and Number of Spikes confidence Z with the probabilities of each of being healthy or unhealthy for each of X, Y, Z represented by six rectangles A, B, C, D, E and F.

The widths of X, Y and Z are each the same and represent a value of 1 or 100% depending on the value used for the algorithm confidence levels. The points along the width W at which unhealthy rectangle A, D and E end and healthy rectangles B, D and F starts is equal to the value of the respective algorithm confidence levels.
The heights XH, YH and ZH are different for each algorithm 60. In order to present the relative reliability of each algorithm the height represents the probability that the analyzed behavior matches the confirmation of the instrument being healthy or unhealthy i.e 1 - 2 x P(UB|H). This can be calculated in each case from the area 120 using the algorithm described above. The test algorithms 60 with large overlap between the healthy and unhealthy distributions 100 and 110 will be deemed less reliable.

Each height XH, YH, ZH does of course remain the same for the healthy and unhealthy rectangle from the same test algorithm 60 so that:

$$\text{The confidence level for Fluctuation Level } P(H|X) = A / (A + B)$$

$$\text{The confidence level for Moment Correlation } P(H|Y) = C / (C + D)$$

$$\text{The confidence level for the Spike Number } P(H|Z) = E / (E + F)$$

The overall confidence health index 8- will be the total chance of being healthy. From Bayesian probability theorem, the overall probability P(H) can be derived as follows:-

$$P(H) = P(H|X).P(X) + P(H|Y).P(Y) + P(H|Z).P(Z)$$

P(H|X), P(H|Y) and P(H|Z) have been determined above but the values of P(X), P(Y) and P(Z) are also needed.
P(X) + P(Y) + P(Z) = 1. P(X), P(Y), and P(Z) is the probability between each other. i.e. P(X) = X / (X+Y+Z). P(Y) = Y / (X+Y+Z) and P(Z) = Z / (X+Y+Z). These values inform the probability that a pattern exists in the current snapshot of the instrument reading. Since the width W is the same in each case P(X) = XH / (XH+YH+ZH). P(Y) = YH / (XH+YH+ZH) and P(Z) = ZH / (XH+YH+ZH).
Accordingly P(H) the overall health index 80 can be calculated.
In a predictive maintenance program the value of P(H) can then be used to determine if the instrument I should be serviced immediately or to adjust the next date when it will be maintained operators of an industrial plant may decide that for any instruments for which P(H)<0/05 (5%) that it should be treated as a failed instrument. In alternative embodiments single algorithm confidence levels may be used in a similar way. Where multiple algorithms 60 are used, rather than combining them, each can be used for a threshold test but this will likely create more examples of false detection of faulty instruments than if the combined index 80 is used,

**Claims**

1. A method of measuring a characteristic of the output of an instrument by using one or more test algorithms (60) to produce a confidence health index (80) for the instrument, **characterised in that** the method comprising the steps of:

   generating an expected distribution (102,100) of the instrument when it was determined healthy, and an expected distribution of the instrument (104, 110) when unhealthy by modelling based on past behaviour of the instrument;
   providing by the instrument a series of instrument readings and a data set comprising measurements of a process variable to an analyser;
   applying, by the analyser, a first test algorithm to the series of instrument readings in isolation to produce a first score;
   applying, by the analyser, at least a second test algorithm different from the first test algorithm, to the series of instrument readings in conjunction with the data set, to produce at least a second score;

wherein the first and the at least second test algorithms comprise pattern recognition test algorithms among: fluctuation level, fluctuation period, number of spikes, value, deviation and moment correlation;

wherein said fluctuation algorithms are not applied to generate a score if no fluctuations are detected in the output of the instrument, no fluctuations being detected when the difference between the highest value and the lowest value in the data set is larger than twice the standard deviation;

calculating a probability that the instrument is healthy and a probability that the instrument is unhealthy by comparing the series of instrument readings to both of the expected distributions of the instrument;

calculating the ratio between the probability that the instrument is healthy and the sum of the probability that the instrument is healthy and of the probability that the instruments is unhealthy to obtain a confidence level indicative of the likelihood of the instrument being unhealthy; and

combining the first score, the at least second score and the confidence level to provide the confidence health index (80) for the instrument.

2. A method according to claim 1 wherein the measurement of the characteristic of the output of the instrument is produced from monitoring the output over a length of time

3. A method according to claim 1 or claim 2 wherein at least one expected distribution is produced from the output of the instrument or a similar instrument when known to be healthy or to be unhealthy over a period of time, which period of time is longer than the length of time over which the characteristic is measured for comparison to the expected distribution.

4. A method according any one of the preceding claims wherein the standard deviation of the unhealthy expected distribution is at least initially taken to be equal to the standard deviation of the healthy expected distribution, and/or the mean of the unhealthy expected distribution is at least initially taken to be equal to the standard deviation of the healthy expected distribution plus or minus a predetermined, integer, coefficient multiplied by the standard deviation.

5. A method according to any one of the preceding claims wherein the characteristic is the discrete number of instances of an event occurring.

6. A method according to claim 5 wherein a classification of an event occurring is measured in terms of standard deviation of another measurable characteristic of the output and/or at least one expected distribution is calculated as a binomial distribution based on likelihood of an instance of an event occurring.

7. A method according to claim 6 wherein the probability used for the binomial distribution of the unhealthy expected distribution is taken to be equal to the probability used for the binomial distribution of the healthy expected distribution, and/or the number of a sequence of independent yes/no experiments used for the binomial distribution of the unhealthy expected distribution (110) is taken to be the reciprocal multiplicative inverse of the number of the sequence of independent yes/no experiments used for the binomial distribution of the healthy expected distribution (100).

8. A method according to claim 5 wherein the characteristic is a measurement of the number of spikes, when the output increases or decrease faster or with greater magnitude than usual.

9. A method according to any preceding claim wherein the characteristic is a measure of the amount by which the output of the instrument fluctuates and corresponds to the average of peak to peak fluctuation of a trend, and/or is, or corresponds to, a rolling average of the output value of the instrument, and/or the characteristic is the average time period in which the instrument output fluctuates between two values, and/or the characteristic is a measure of deviation between two instruments.

10. A method according to any preceding claim comprising the step of measuring a process parameter which can be expected to correlate with the output of the instrument when healthy, and wherein the characteristic is based on a correlation coefficient between the output of instrument and the measured process parameter.

11. A method according to any preceding claim wherein the output is only measured and/or used to contribute towards the characteristic value when a trigger condition has been met.

12. A method according to any preceding claim wherein the steps of calculating and comparing are repeated for a plurality of characteristics providing a plurality of confidence values (80).

**13.** A method according to claim 12 comprising the step of comparing confidence values for different characteristics and providing an overall confidence value, the overall confidence value combining the characteristic confidence levels weighted based on the likelihood of them reporting unhealthy behavior when the instrument is confirmed healthy or vice versa and/or the size of the overlap of the healthy and unhealthy expected distributions (100,110).

**Patentansprüche**

**1.** Verfahren zum Messen eines Merkmals der Ausgabe eines Instruments unter Verwendung eines oder mehrerer Testalgorithmen (60), um einen Konfidenzfunktionsfähigkeitsindex (80) für das Instrument zu erstellen, **dadurch gekennzeichnet, dass** das Verfahren die folgenden Schritte umfasst:

Erzeugen einer erwarteten Verteilung (102, 100) des Instruments, wenn es als funktionsfähig bestimmt wurde, und

eine erwartete Verteilung des Instruments (104, 110), wenn es durch Modellieren auf Grundlage von vergangenem Verhalten des Instruments nicht funktionsfähig ist;

Bereitstellen einer Reihe von Instrumentenanzeigen und einem Datensatz durch das Instrument, umfassend Messungen einer Vorgangsvariablen, an einen Analysator;

Anwenden eines ersten Testalgorithmus auf die Reihe von Instrumentenanzeigen in Isolation durch den Analysator, um eine erste Punktzahl zu erstellen;

Anwenden wenigstens eines zweiten Testalgorithmus, der sich von dem ersten Testalgorithmus unterscheidet, auf die Reihe von Instrumentenanzeigen in Verbindung mit dem Datensatz durch den Analysator, um wenigstens eine zweite Punktzahl zu erstellen;

wobei der erste und der wenigstens zweite Testalgorithmus Mustererkennungstestalgorithmen von Folgendem umfassen: Schwankungsgrad, Schwankungszeitraum, Anzahl von Ausschlägen, einen Wert, eine Abweichung und eine Momentkorrelation;

wobei die Schwankungsalgorithmen nicht angewandt werden, um eine Punktzahl zu erzeugen, falls keine Schwankungen in der Ausgabe des Instruments erfasst werden, wobei keine Schwankungen erfasst werden, wenn der Unterschied zwischen dem höchsten Wert und dem niedrigsten Wert in dem Datensatz größer als die zweifache Standardabweichung ist;

Berechnen einer Wahrscheinlichkeit, dass das Instrument funktionsfähig ist, und einer Wahrscheinlichkeit, dass das Instrument nicht funktionsfähig ist, indem die Reihe der Instrumentenanzeigen mit beiden der erwarteten Verteilungen des Instruments verglichen wird;

Berechnen des Verhältnisses zwischen der Wahrscheinlichkeit, dass das Instrument funktionsfähig ist, und der Summe der Wahrscheinlichkeit, dass das Instrument funktionsfähig ist, und der Wahrscheinlichkeit, dass das Instrument nicht funktionsfähig ist, um einen Konfidenzgrad zu erhalten, der die Wahrscheinlichkeit, dass das Instrument nicht funktionsfähig ist, anzeigt; und

Kombinieren der ersten Punktzahl, der wenigstens zweiten Punktzahl und des Konfidenzgrads, um den Konfidenzfunktionsfähigkeitsindex (80) für das Instrument bereitzustellen.

**2.** Verfahren nach Anspruch 1, wobei die Messung des Merkmals der Ausgabe des Instruments durch Überwachen der Ausgabe über eine Zeitdauer erstellt wird.

**3.** Verfahren nach Anspruch 1 oder 2, wobei wenigstens eine erwartete Verteilung von der Ausgabe des Instruments oder einem ähnlichen Instrument, wenn bekannt ist, ob es funktionsfähig oder nicht funktionsfähig ist, über einen Zeitraum erstellt wird, wobei der Zeitraum länger ist als die Zeitdauer, über die das Merkmal zum Vergleich mit der erwarteten Verteilung gemessen wird.

**4.** Verfahren nach einem der vorhergehenden Ansprüche, wobei die Standardabweichung der nicht funktionsfähigen erwarteten Verteilung wenigstens zu Beginn als der Standardabweichung der funktionsfähigen erwarteten Verteilung entsprechend genommen wird, und/oder das Mittel der nicht funktionsfähigen erwarteten Verteilung wenigstens zu Beginn als der Standardabweichung der funktionsfähigen erwarteten Verteilung plus oder minus eines vorgegebenen ganzzahligen Koeffizienten, der mit der Standardabweichung multipliziert wird, genommen wird.

**5.** Verfahren nach einem der vorhergehenden Ansprüche, wobei das Merkmal die diskrete Anzahl von Instanzen eines auftretenden Ereignisses ist.

**6.** Verfahren nach Anspruch 5, wobei eine Klassifizierung eines auftretenden Ereignisses in Bezug auf eine Standardabweichung eines anderen messbaren Merkmals der Ausgabe gemessen wird und/oder wenigstens eine erwartete Verteilung als eine Binomialverteilung auf Grundlage der Wahrscheinlichkeit einer Instanz eines auftretenden Ereignisses berechnet wird.

7. Verfahren nach Anspruch 6, wobei die Wahrscheinlichkeit, die für die Binomialverteilung der nicht funktionsfähigen erwarteten Verteilung verwendet wird, als der Wahrscheinlichkeit entsprechend genommen wird, die für die Binomialverteilung der funktionsfähigen erwarteten Verteilung verwendet wird, und/oder die Anzahl einer Sequenz von unabhängigen ja/nein-Experimenten, die für die Binomialverteilung der nicht funktionsfähigen erwarteten Verteilung (110) verwendet werden, als die multiplikative Kehrinverse der Anzahl der Sequenz von unabhängigen ja/nein-Experimenten genommen wird, die für die Binomialverteilung der funktionsfähigen erwarteten Verteilung (100) verwendet werden.

8. Verfahren nach Anspruch 5, wobei das Merkmal eine Messung der Anzahl von Ausschlägen ist, wenn sich die Ausgabe schneller oder mit einer größeren Größe als gewöhnlich steigert oder verringert.

9. Verfahren nach einem der vorhergehenden Ansprüche, wobei das Merkmal eine Messung der Menge ist, mir der die Ausgabe des Instruments schwankt und dem Durschnitt einer Spitzen-zu-Spitzen-Schwankung eines Trends entspricht, und/oder ein gleitender Durchschnitt des Ausgabewertes des Instruments ist oder diesem entspricht, und/oder das Merkmal der Durchschnittszeitraum ist, in dem die Instrumentenausgabe zwischen zwei Werten schwankt, und/oder das Merkmal eine Abweichungsmessung zwischen zwei Instrumenten ist.

10. Verfahren nach einem der vorhergehenden Ansprüche, den Schritt des Messens eines Vorgangsparameters umfassend, von dem erwartet werden kann, dass er mit der Ausgabe des Instruments korreliert, wenn es funktionsfähig ist, und wobei das Merkmal auf einem Korrelationskoeffizienten zwischen der Ausgabe des Instruments und dem gemessenen Vorgangsparameters basiert ist.

11. Verfahren nach einem der vorhergehenden Ansprüche, wobei die Ausgabe nur gemessen wird und/oder verwendet wird, um zu dem Merkmalwert beizutragen, wenn eine Auslösebedingung erfüllt ist.

12. Verfahren nach einem der vorhergehenden Ansprüche, wobei die Schritte des Berechnens und des Vergleichens für mehrere Merkmale wiederholt werden, um mehrere Konfidenzwerte (80) bereitzustellen.

13. Verfahren nach Anspruch 12, umfassend den Schritt des Vergleichens von Konfidenzwerten für verschiedene Merkmale und des Bereitstellens eines Gesamtkonfidenzwertes, wobei der Gesamtkonfidenzwert die Merkmalkonfidenzgrade, die auf Grundlage der Wahrscheinlichkeit, dass sie nicht funktionsfähiges Verhalten berichten, wenn das Instrument als funktionsfähig bestätigt wurde, oder umgekehrt, gewichtet sind, und/oder die Größe des Überlappens der funktionsfähigen und nicht funktionsfähigen erwarteten Verteilung (100, 110) kombiniert.

## Revendications

1. Procédé de mesure d'une caractéristique de la sortie d'un instrument par l'utilisation d'un ou plusieurs algorithmes d'essai (60) pour produire un indice de santé de confiance (80) concernant l'instrument, **caractérisé en ce que** le procédé comprend les étapes de :

   génération d'une distribution attendue (102, 100) de l'instrument lorsqu'il a été déterminé comme en bonne santé, et
   une distribution attendue de l'instrument (104, 110) lorsqu'il est en mauvaise santé par une modélisation basée sur un comportement passé de l'instrument ;
   fourniture par l'instrument d'une série de lectures d'instrument et d'un jeu de données comprenant des mesures d'une variable de traitement à un analyseur ;
   application, par l'analyseur, d'un premier algorithme d'essai à la série de lectures d'instrument de façon isolée pour produire une première cote ;
   application, par l'analyseur, d'au moins un second algorithme d'essai différent du premier algorithme d'essai, à la série de lectures d'instrument conjointement avec le jeu de données, pour produire au moins une seconde cote ;
   dans lequel le premier et le au moins un second algorithme d'essai comprennent des algorithmes d'essai de reconnaissance de motif parmi : niveau de fluctuation, période de fluctuation, nombre de pics, valeur, écart et corrélation de moment ;

dans lequel lesdits algorithmes de fluctuation ne sont pas appliqués pour générer une cote si aucune fluctuation n'est détectée dans la sortie de l'instrument, aucune fluctuation n'étant détectée lorsque la différence entre la plus haute valeur et la plus basse valeur dans le jeu de données est plus grande que deux fois l'écart-type ;

calcul d'une probabilité que l'instrument est en bonne santé et d'une probabilité que l'instrument est en mauvaise santé par comparaison de la série de lectures d'instrument aux deux distributions attendues de l'instrument ;

calcul du rapport entre la probabilité que l'instrument est en bonne santé et la somme de la probabilité que l'instrument est en bonne santé et de la probabilité que l'instrument est en mauvaise santé pour obtenir un niveau de confiance indicatif de la vraisemblance que l'instrument est en mauvaise santé ; et

combinaison de la première cote, de la au moins une seconde cote et du niveau de confiance pour fournir l'indice de santé de confiance (80) concernant l'instrument.

2. Procédé selon la revendication 1, dans lequel la mesure de la caractéristique de la sortie de l'instrument est produite par surveillance de la sortie au cours d'une durée.

3. Procédé selon la revendication 1 ou la revendication 2, dans lequel la au moins une distribution attendue est produite à partir de la sortie de l'instrument ou un instrument similaire lorsqu'il est connu comme étant en bonne santé ou comme étant en mauvaise santé, sur une durée, laquelle durée est plus longue que la durée sur laquelle la caractéristique est mesurée pour comparaison à la distribution attendue.

4. Procédé selon l'une quelconque des revendications précédentes, dans lequel l'écart-type de la distribution attendue en mauvaise santé est au moins initialement pris comme étant égal à l'écart-type de la distribution attendue en bonne santé, et/ou la moyenne de la distribution attendue en mauvaise santé est au moins initialement prise comme étant égale à l'écart-type de la distribution attendue en bonne santé plus ou moins un coefficient entier prédéterminé, multiplié par l'écart-type.

5. Procédé selon l'une quelconque des revendications précédentes, dans lequel la caractéristique est le nombre discret d'instances d'un événement se produisant.

6. Procédé selon la revendication 5, dans lequel une classification d'un événement se produisant est mesurée en termes d'écart-type d'une autre caractéristique mesurable de la sortie et/ou au moins une distribution attendue est calculée comme une distribution binomiale basée sur la vraisemblance d'une instance d'un événement se produisant.

7. Procédé selon la revendication 6, dans lequel la probabilité utilisée pour la distribution binomiale de la distribution attendue en mauvaise santé est prise comme étant égale à la probabilité utilisée pour la distribution binomiale de la distribution attendue en bonne santé, et/ou le nombre d'une séquence d'expériences oui/non indépendantes utilisées pour la distribution binomiale de la distribution attendue en mauvaise santé (110) est prise comme étant l'inverse multiplicatif réciproque du nombre de la séquence d'expériences oui/non indépendantes utilisées pour la distribution binomiale de la distribution attendue en bonne santé (100).

8. Procédé selon la revendication 5, dans lequel la caractéristique est une mesure du nombre de pics, lorsque la sortie augmente ou diminue plus vite ou avec une plus grande ampleur que d'habitude.

9. Procédé selon l'une quelconque des revendications précédentes, dans lequel la caractéristique est une mesure de la quantité avec laquelle la sortie de l'instrument fluctue et correspond à la moyenne d'une fluctuation crête à crête d'une tendance, et/ou est, ou correspond à, une moyenne mobile de la valeur de sortie de l'instrument, et/ou la caractéristique est la durée moyenne pendant laquelle la sortie d'instrument fluctue entre deux valeurs, et/ou la caractéristique est une mesure d'écart-type entre deux instruments.

10. Procédé selon l'une quelconque des revendications précédentes, comprenant l'étape de mesure d'un paramètre de traitement qui peut être attendu pour se corréler avec la sortie de l'instrument lorsqu'il est en bonne santé, et dans lequel la caractéristique est basée sur un coefficient de corrélation entre la sortie de l'instrument et le paramètre de traitement mesuré.

11. Procédé selon l'une quelconque des revendications précédentes, dans lequel la sortie est seulement mesurée et/ou utilisée pour contribuer à la valeur caractéristique lorsqu'une condition de déclenchement a été satisfaite.

12. Procédé selon l'une quelconque des revendications précédentes, dans lequel les étapes de calcul et de comparaison sont répétées pour une pluralité de caractéristiques fournissant une pluralité de valeurs de confiance (80).

13. Procédé selon la revendication 12, comprenant l'étape de comparaison de valeurs de confiance pour des caractéristiques différentes et fourniture d'une valeur de confiance globale, la valeur de confiance globale combinant les niveaux de confiance caractéristique pondérés basés sur la vraisemblance qu'il rapporte un comportement en mauvaise santé lorsque l'instrument est confirmé comme en bonne santé ou vice versa et/ou la taille du chevauchement des distributions attendues en bonne et en mauvaise santé (100, 110).

Flow meter

FT

I

ON

P

Pump

Fig. 1

EP 2 519 895 B1

Fig. 2

Fig. 3

EP 2 519 895 B1

# Fluctuation Level Test Algorithm

Fluctuation Level = 0.36 MOL%

Fig. 4

*Actual NIR type Analyzer trending which measure Aromatics(%) Content after catalytic reformer reactors in our Aromatics Plant*

Fig. 5

# Spike Detection Test in *Analyzer²*

Real plant trending of Paraxylene Purity Analyzer using gas chromatograph. The spikes in the reading was due to failure of GC peak detection which was a result of carier gas pressure regulator failure.

**Fig. 6**

$$\text{Confidence Level} = \frac{P(H)}{P(U) + P(H)}$$

**Fig. 7**

EP 2 519 895 B1

Fig. 8

**REFERENCES CITED IN THE DESCRIPTION**

**Patent documents cited in the description**

- US 5680409 A

- US 2005182581 A